# EUROPEAN PATENT SPECIFICATION

(11) **EP 2 094 061 B1**
(45) Date of publication and mention of the grant of the patent: **09.04.2014**
(21) Application number: 09152368.8
(22) Date of filing: 09.02.2009
(51) Int. Cl.: H05B 6/68, H05B 6/66

(54) **Cooking heater**
Kochheizer
Réchaud de cuisson

(30) Priority: 19.02.2008 JP 2008036829
(43) Date of publication of application: 26.08.2009
(73) Proprietor: Panasonic Corporation, Kadoma-shi Osaka 571-8501 (JP)
(72) Inventor: Nakashita, Kiyoshi Panasonic Corporation Intellectual Property Rights Operations Company, Osaka 540-6207 (JP)
(74) Representative: Schwabe - Sandmair - Marx

(56) References cited:
- JP-A- 2006 112 692

## Description

### FIELD OF THE INVENTION

The present invention relates to a cooking heater employing a microprocessor.

### BACKGROUND OF THE INVENTION

A conventional high-frequency cooking heater, which is controlled by a control circuit employing a microprocessor, needs electric power around the clock at the control circuit even when the cooking heater is not in use, for the control circuit must be ready to detect a key-in or should maintain clock operation. Although the cooking heater is used only for a short time per day, the continuous supply of electric power to the control circuit over a long period incurs a great energy loss, even if the power consumption amounts to only one watt.

A request for reducing a standby power of home appliances, such as a microwave oven, has become stronger in recent years. To meet such a request, a door switch is provided between the commercial power source and a power supply circuit of an appliance. The door switch is turned on by opening a door of the appliance, and is turned off by closing the door for self holding the appliance. This appliance is disclosed as a high-frequency cooking heater in, e.g. Unexamined Japanese Patent Application Publication No. H07 - 217906.

The high-frequency cooking heater disclosed in the foregoing patent document connects a load to the commercial power source when its door is closed, and stops supplying the power to its control circuit. When the door is opened, the cooking heater cuts the connection between the load and the commercial power source, and starts supplying the power to the control circuit. A supply of power to the control circuit will produce a direct current necessary for the control circuit to work.

To be more specific, when the door is opened for inputting food into a cooking chamber, then the electric power is supplied to the control circuit, and a predetermined timer-time is set in the microprocessor. Just after the door is closed, the microprocessor starts deduction from the timer-time (countdown), and if no key-in signal or no open/close signal for the door is supplied, then it stops the supply of power to the control circuit when the timer-time is over.

If a key-in signal or a signal supplied from a door switch circuit is input before the timer-time is over, the timer-time is reset, and the stop of supplying power is postponed. The timer-time is set long enough for a user to set a recipe through key-in, or to confirm whether or not the cooking finishes with a display.

The user inputs food into the cooking chamber, closes the door, and sets a recipe through key-in, then starts heating. The microprocessor then turns its state from the timer deduction state to a cooking state. After the cooking finishes, the microprocessor resets the timer, and then starts the deduction in the reset timer-time.

In the case where the door is opened or closed according to a cooking program, if the door is re-closed after the door is opened, the microprocessor will not determine that the microwave oven falls into a non-use state. In other words, the supply of power to the control circuit is cut off only by a completion of a cooking program, or a cancellation of a cooking program followed by no opening/closing act of the door or no key-in within a predetermined timer-time. After the cut-off of the power to the control circuit, an opening act of the door allows supplying power to the control circuit again.

As discussed above, when the microwave oven is not used as a cooking heater, the supply of power to the control circuit is halted in order not to consume the electric power uselessly. However, this microwave oven consumes the power as usual if its door is left open, thus the door must be closed for eliminating the standby power. This is inconvenient for users, because the cooking chamber is heated after the cooking, and some users leave the door open for cooling the cooking chamber. In this case, the microwave oven does not contribute to power saving.

The control circuit needs power only when a recipe is set or when a cooking is performed. However, the control circuit is powered as early as when the door is closed just after food is input into the oven, so that useless power is consumed. What is worse, a transformer is used between the control circuit and the commercial power source in order to supply the electric power, and the transformer incurs no-load loss when the oven is not in use. The no-load loss includes copper loss and iron-loss, and amounts to at least 250mW. This structure thus adversely affects energy-saving performance.

An home appliance that can overcome the foregoing inconveniences is disclosed in, e.g. Unexamined Japanese Patent Application Publication No. 2002 - 22181, the high-frequency cooking heater disclosed in this patent document reduces its power consumption during the non-use state regardless of a status of its door.

This high-frequency cooking heater senses an opening act or a closing act of the door with its differentiating circuit, and then allows self-holding the control circuit. In the due course, after a lapse of a given time, if no opening or closing act of the door occurs, or no key-in occurs, the supply of power to the control circuit is cut-off.

The foregoing mechanism allows turning on a power on/off section only after the door is opened or closed whichever it can be, whereby a controller including the microprocessor and its peripheral circuits can be powered. If no change occurs in the operation of the cooking heater during a given time, the supply of power to the controller is cut-off regardless of the door status. This structure allows cutting off the power to the controller in due course even if the door is left open, so that the power saving can be achieved.

A high-frequency cooking heater having a clock function counts time with a microprocessor forming the control circuit, which thus needs to be always powered. The cooking heaters disclosed in the foregoing two patent documents; however, do not include the clock function. Unexamined Japanese Patent Application Publication No. H11 - 55853 discloses another high-frequency cooking heater that includes the clock function and thus has two modes, i.e. a power saving mode and a regular mode, for considering users who need the clock function. The power saving mode reduces the standby power, and the regular mode continues to power the control circuit in order to display a clock. These two modes can be switched over.

What is more, an auxiliary control circuit is provided in order to dedicatedly control a timer function during the regular mode in which the clock is displayed. The supply of power is cut off to the control circuit including the microprocessor except the auxiliary control circuit. This structure allows reducing the power consumption to the lowest possible level during the standby state. Assume that a conventional high-frequency cooking heater having a standby power saving function consumes not more than 50mW in the standby state, and then the foregoing structure allows achieving a timer function, such as pre-selecting a time, with the same power, i.e. by consuming not more than 50mW. This cooking heater is disclosed in, e.g. Unexamined Japanese Patent Publication No. 2006 - 112692.

The foregoing cooking heater; however, needs the auxiliary control circuit additionally, which boosts the cost. During the regular mode, where the clock is displayed, once the cooking heater falls into a standby state, the supply of power to the microprocessor is cut-off, so that the clock cannot be displayed, which inconveniences the users.

### SUMMARY OF THE INVENTION

The present invention addresses the problems discussed above, and aims to provide a cooking heater that has the advantages below:
1. Instead of cutting off the power to the control circuit including a microprocessor, the power is cut off to a power-supply clock generating circuit that consumes greater power among others while the power to the microprocessor is maintained.
2. The microprocessor can move into a SLOW mode, thereby reducing the standby power.

To be more specific, the cooking heater of the present invention includes the following elements:
a cooking chamber in which an item to be heated is accommodated;
a door disposed to the cooking chamber;
a heater for heating the item to be heated in the cooking chamber;
a main control circuit for controlling the heater;
a microprocessor for controlling the main control circuit;
a clock function block, where time is counted by the microprocessor;
a display section for displaying the time counted in the clock function block;
a power-supply clock generating circuit for supplying a power-supply clock for the microprocessor;
a first power supply for driving the microprocessor, the clock function block, the display section, and the main control circuit;
a first power-supply controller for controlling a supply of power from the first power supply to the microprocessor, the clock function block, the display section, and the main control circuit;
a second power supply for driving the power-supply clock generating circuit; and
a second power-supply controller for controlling the supply of power from the second power supply to the power-supply clock generating circuit,

characterized in that:
when the microprocessor senses that a timer function in the clock function block is set, it prompts the first power supply to power the clock function block and the display section. At the same time the microprocessor has the second power-supply controller supply the power to the power-supply clock generating circuit in response to an opening or a closing act of the door. If no change in operation occurs during a given time, the supply of power is cut off to the power-supply clock generating circuit,

wherein when the microprocessor senses that the timer function is not set in the clock function block, and if no change in operation occurs during a given time after the door is opened or closed, the first power-supply controller and the second power-supply controller prompt the microprocessor to stop the supply of power from the first power supply and the second power supply.

The foregoing structure allows cutting off the power to the power-supply clock generating circuit that consumes greater power among others while the power to the microprocessor is maintained. The standby power can be thus reduced to the lowest possible level. The cooking heater having the foregoing advantage and produced at a lower cost is thus obtainable, because the auxiliary control circuit supposed to be added to the control circuit can be eliminated.

### BRIEF DESCRIPTION OF THE DRAWINGS

Fig. 1 shows a block diagram illustrating a cooking heater in accordance with an embodiment of the present invention.
Fig. 2 shows a perspective view of the cooking heater shown in Fig. 1.
Fig. 3 shows a flowchart illustrating an operation of a cooking heater in accordance with an embodiment of the present invention.

### DESCRIPTION OF PREFERRED EMBODIMENT

An exemplary embodiment of the present invention is demonstrated hereinafter with reference to the accompanying drawings, in which dimensions are enlarged for illustrating the structure more understandable. The embodiment does not limit the present invention.

### EXEMPLARY EMBODIMENT

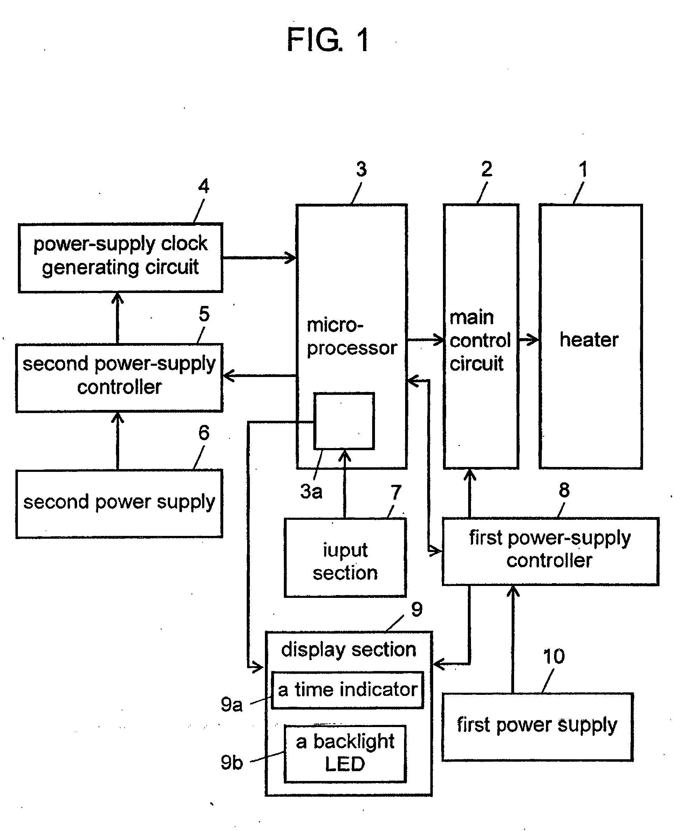

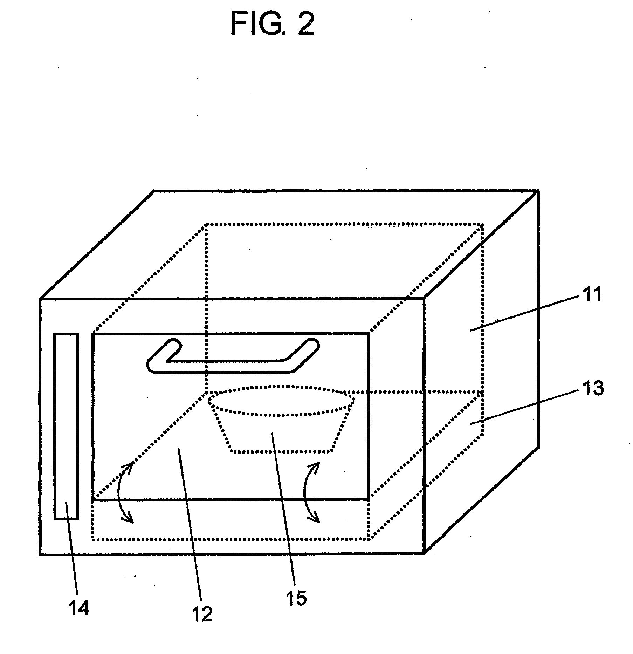

Fig. 1 shows a block diagram illustrating a cooking heater in accordance with the embodiment of the present invention. Fig. 2 shows a perspective view of the same cooking heater. In Fig. 1, microprocessor 3 controls cooking heater 1 with main control circuit 2, and determines through information supplied from input section 7 whether or not a user uses the cooking heater and whether or not the user uses a timer function, thereby controlling second power-supply controller 5. This structure allows turning on/off the power supplied from second power supply 6 to power-supply clock generating circuit 4.

Microprocessor 3 controls main control circuit 2, display section 9, and first power-supply controller 8 based on the information supplied from input section 7. First power-supply controller 8 controls the supply of power from the first power supply 10 to main control circuit 2, and display section 9 including time indicator 9a and backlight LED 9b.

As shown in Fig. 2, the cooking heater in accordance with the embodiment includes the following elements:
cooking chamber 11 which accommodates an item to be heated, e.g. food 15;
door 12 disposed to cooking chamber 11 to be opened or closed along the arrow marks;
heater 13 for heating food 15; and
controller 14 including input section 7 and display section 9 (not shown in Fig. 2).

In the inner part of controller 14, microprocessor 3 shown in Fig. 1, circuits, a control section, and a power supply are placed and they are electrically connected to each other, although Fig. 2 does not show these elements. Display section 9 is formed of time-indicator 9a and backlight LED 9b.

The cooking heater thus constructed is demonstrated its work hereinafter. First, when a cooking time or the like is not set in the cooking heater, in other words, when input section 7 cancels the timer function in clock function block 3a, a clock needs not count time, so that the time needs not to be displayed. An input signal such as a signal supplied from input section 7 or a signal indicating an opening act or a closing act of door 12 is thus not input to microprocessor 3 within a given time. When no change in operation occurs within the given time as discussed above, the power is not supplied to every structural element including microprocessor 3.

On the other hand, when a cooking time or the like is set in the cooking heater, the clock needs to count time, which thus needs to be displayed. An input signal such as a signal supplied from input section 7 or a signal indicating an opening act or a closing act of door 12 is thus not input to microprocessor 3 within the given time. When no change in operation occurs as discussed above, microprocessor 3 or display section 9 is not cut off the power, but power-supply clock generating circuit 4 is cut-off the power. On top of that, microprocessor 3 is switched over into the SLOW mode, which can save the power from the regular mode. During this work, backlight LED 9b of display section 9 is pulse-driven at a low duty, so that an LED displays the time at a lower brightness than the regular one. This display at a lower brightness tells the user that the cooking heater works in a power-saving mode.

Either one of the foregoing states, namely, when a cooking time is set or not set, the cooking heater does not accept any regular key-in. Opening or closing door 12 will prompt microprocessor 3 to restore from its OFF state during the cancellation of the timer function to ON state, and it will also prompt microprocessor 3 to restore from the power-saving mode to the regular mode, and the brightness of backlight LED 9b is restored from the low level to the regular one. Then the cooking heater can work in a regular manner.

Next, a method of setting or canceling the clock function is demonstrated hereinafter. When the cooking heater is plugged in and supplied power, time is not set yet. In an initial state, i.e. in the standby state, a press onto a clock key prompts the cooking heater to move into a timer mode which allows setting time. In the timer mode, the time can be changed with an encoder or a press onto the clock key for setting the clock at the present time. Then a press onto the clock key again sets the clock at a desired time, and the cooking heater displays the clock in the standby state. If the user wants to cancel the clock function, a press onto the clock key during the initial state, i.e. in the standby state, will move the cooking heater into a mode where time can be set in the clock. During this mode, a press onto the clock key for, e.g. two seconds, will cancel the clock function.

The work of microprocessor 3 is demonstrated hereinafter. The cooking heater is plugged in, and microprocessor 3 is powered, so that the built-in program thereof is executed. The default setting of microprocessor 3 prompts second power-supply controller 5 to supply the power to power-supply clock generating circuit 4, and a power-supply clock thus generated is supplied to microprocessor 3.

A given timer-time, e.g. six minutes, is set as a default setting in microprocessor 3. The power-supply clock supplied to microprocessor 3 has a frequency of 50Hz and a cycle of 20ms, so that if one pass of a main routine in software process of microprocessor 3 starts synchronously with this power-supply clock, then each one of the passes of the main routine can count 20ms.

If the foregoing setting is implemented, 50 passes of the main routine amount to one second (1 sec). Assume that the timer-time is deducted every one second based on this setting. If no input signal such as a key-in from input section 7 is supplied during the deduction, microprocessor 3 changes an output signal to OFF state when the timer-time is over.

In the case of selecting a recipe or setting a heating function through input section 7, microprocessor 3 is still going to keep the output signal at ON level even when the timer-time is over. At this time microprocessor 3 changes the output signal to OFF level just when the timer-time is over.

This change to OFF level halts the supply of power-supply clock signals when the clock function is used, so that the clock is counted with an interruption cycle instead of the power-supply cycle. The software process can be implemented by a main routine process or an interruption process. Actually the interruption process interrupts the main routine process at given intervals, e.g. every 500µs. This interruption interval of 500µs as one count is counted 40 times, thereby amounting to 20ms, so that the time used in microprocessor 3 can be counted.

The SLOW mode is available in almost all the microprocessors 3, and it stops an oscillator of high-speed action, and then switches to an oscillator of low-speed action for the cooking heater to work with lower power consumption.

As discussed above, the supply of power to power-supply clock generating circuit 4 is cut off and microprocessor 3 is changed into the SLOW mode, so that the cooking heater in accordance with this embodiment can reduce the power consumption from that of the regular state while the clock is displayed. The cooking heater thus can be operated with lower power consumption.

To be more specific, the cooking heater of the present invention includes the following elements:
cooking chamber 11 which accommodates food 15 to be heated;
door 12 disposed to cooking chamber 11;
heater 13 for heating food 15;
main control circuit 2 for controlling heater 13;
microprocessor 3 for controlling main control circuit 2;
clock function block 3a of which time is counted with the microprocessor 3;
display section 9 for displaying the time counted in the clock function block 3a;
power-supply clock generating circuit 4 for working the microprocessor 3;
first power supply 10 for driving microprocessor 3, clock function block 3a, display section 9, and main control circuit 2;
first power-supply controller 8 for controlling the supply of power from first power supply 10 to microprocessor 3, clock function block 3a, display section 9, and main control circuit 2;
second power supply 6 for driving power-supply clock generating circuit 4; and
second power-supply controller 5 for controlling the supply of power from second power supply 6 to power-supply clock generating circuit 4.

When microprocessor 3 senses that a timer function in clock function block 3a is set, it prompts first power supply 10 to power clock function block 3a and display section 9, and microprocessor 3 has second power-supply controller 5 supply power to power-supply clock generating circuit 4 in response to an opening or a closing act of door 12. If no change in operation occurs during a given time, the supply of power is cut off to power-supply clock generating circuit 4.

When microprocessor 3 senses that the timer function is not set in clock function block 3a, it prompts first power-supply controller 8 and second power-supply controller 5 to stop the supply of power from the first power supply 10 and second power supply 6 provided no change in operation occurs within a given time after the door is opened or closed.

The foregoing structure allows cutting off the power to power-supply clock generating circuit 4 that consumes greater power among others while the supply of power to microprocessor 3 is maintained. The standby power can be thus reduced to the minimum level. The cooking heater having the foregoing advantage and produced at a lower cost is obtainable, because the auxiliary control circuit which is supposed to be available in the control circuit can be eliminated. When the cooking heater moves into the standby state with the clock function being available, the clock can be displayed. As a result, the power consumption can be reduced in the standby state without increasing the cost.

Power-supply clock generating circuit 4 supplies a power-supply clock for microprocessor 3 to synchronize to this clock. This structure thus needs microprocessor 3 to be formed of two CPUs, and this two-CPU structure allows each one of the CPUs to count the same timing with more ease because the two CPUs are provided with the same power-supply clock. At the same time, a start of the main-routine program is set at a fall of the power-supply clock, so that the timer for counting the clock can be counted with ease.

Microprocessor 3 is moved into the SLOW mode if no change occurs in operation during a given time after door 12 is opened or closed. This structure allows maintaining the supply of power to microprocessor 3 while the supply of power to power-supply clock generating circuit 4 is cut off. The power consumption can be thus further reduced than an amount of power saved during the standby state.

Display section 9 formed of time-indicator 9a and backlight LED 9b, and when the supply of power to power-supply clock generating circuit 4 is halted, the brightness of backlight LED 9b is changed for indicating that the operation is moved into the power-saving mode. The structure discussed above allows the cooking heater to work this way: in the case of no clock function available, and no change occurring in the operation during a given time, the power-supply of microprocessor 3 is turned off and door 12 is opened, so that no key-in is accepted insofar as the power supply of microprocessor 3 is not turned on. Accordingly, in the case of the clock function available, and no change occurring in the operation during a given time, microprocessor 3 is not turned off so that it can display and count the clock, and yet it is moved into the power-saving mode.

In accordance with the specification in the case of no clock function available, no key-in can be accepted insofar as the operation is not restored from the power-saving mode to the regular mode by opening door 12. The user can be informed of this status, so that the user can thus understand that the cooking heater works in a mode where no key-in is accepted.

Assume that a user leaves the cooking heater in a non-use state while the cooking heater is in the initial state with the clock displayed. In this case, microprocessor 3 can be moved into the SLOW mode, so that the standby power consumption of the cooking heater can be reduced to the lowest possible level.

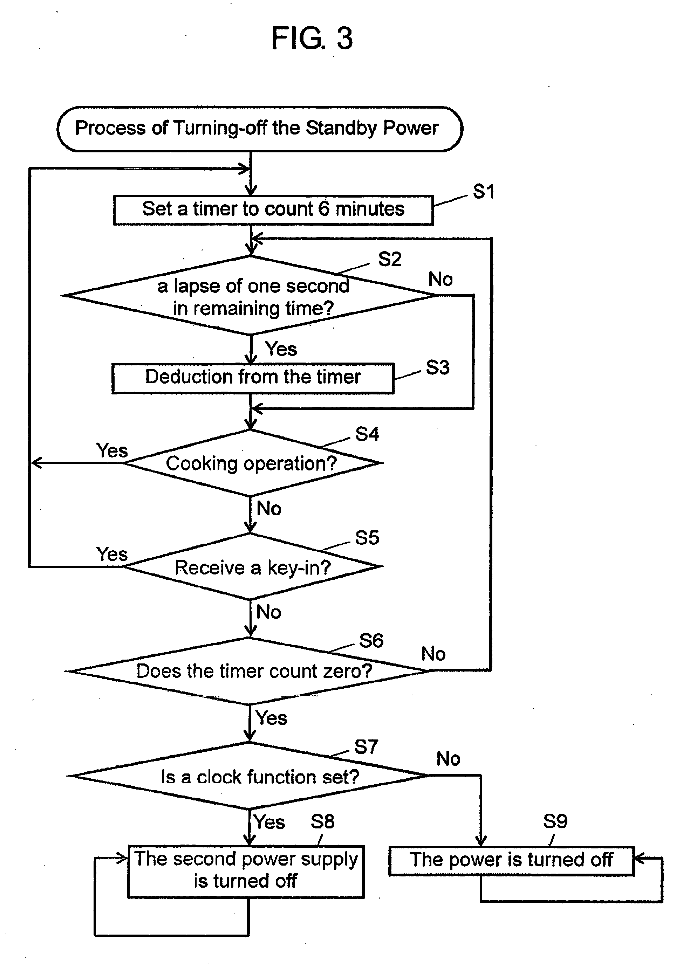

Fig. 3 shows a flowchart illustrating the work of the cooking heater in accordance with the embodiment of the present invention. The work of the cooking heater is detailed hereinafter with reference to Fig. 3. First, in step S1 microprocessor 3 sets 360 seconds, or 6 minutes, at the timer as a default setting of an OFF time of the power supply. The timer here includes a time counting function.

Next, in step S2, microprocessor 3 counts time based on a clock supplied from the power supply, and moves into step S3 after a lapse of one second. Then in step S3, microprocessor 3 deducts (countdown) the timer by one second until the timer reaches 0 (zero) second, at which the cooking heater moves into step S4. However, if the timer is set at 0 second, the heater moves directly into step S4 without carrying out the deduction. In other words, the process jumps to step S4 as shown in Fig. 3.

In step S4, microprocessor 3 determines based on the content stored in a temporary memory RAM whether or not the cooking heater is now cooking, and if the heater is cooking, then the process returns to step S1. All the timers can be thus initialized, so that the power is not cut off during the cooking.

If the cooking heater stays out of cooking, then the process moves to step S5, in which a key-in from input section 7 prompts the process to move into step S6. No key-in from input section 7 prompts the process to move into step S7. In step S6, a comparison between the keyed-in content and the present state prompts the process into a new state. For instance, a press on a cooking key in the initial state will change the cooking heater into a setting state, then the process returns to step S2.

In step S7, microprocessor 3 refers to the content stored in the RAM whether or not the timer function is set. If the timer function is not set, the process jumps to step S9, and if the timer function is set, the process moves into step S8.

In step S8, microprocessor 3 outputs an OFF signal to power-supply clock generating circuit 4 via second power-supply controller 5, so that the supply of power to circuit 4 is cut off. In step S9, a power-supply holding signal supplied from microprocessor 3 is cut off so that the supply of power to microprocessor 3 is cut off.

According to the flowchart discussed above, the supply of power is cut off to power-supply clock generating circuit 4, which consumes a large amount of power, while the supply of power is maintained to microprocessor 3. This mechanism allows reducing the standby-power consumption to the lowest possible level and since it needs no additional circuit such as an auxiliary control circuit. As a result, the cooking heater with the lowest possible standby-power consumption is thus obtainable without increasing the cost.

The structure of the cooking heater of the present invention can reduce the standby-power with ease, and this structure can be used not only in the cooking heater but also in other home appliances for advantageously reducing the standby-power.

## Claims

1. A cooking heater (1) having:
a cooking chamber (11) for accommodating an item (15) to be heated;
a door (12) disposed to the cooking chamber (11);
a heater (13) for heating the item (15) to be heated in the cooking chamber (11);
a main control circuit (2) for controlling the heater (13);
a microprocessor (3) for controlling the main control circuit (2);
a clock function block (3a) in which time is counted by the microprocessor (3);
a display section (9) for displaying the time counted in the clock function block (3a);
a power-supply clock generating circuit (4) for supplying a power-supply clock for the microprocessor (3);
a first power supply (10) for driving the microprocessor (3), the clock function block (3a), the display section (9), and the main control circuit (2);
a first power-supply controller (8) for controlling a supply of power from the first power supply (10) to the microprocessor (3), the clock function block (3a), the display section (9), and the main control circuit (2);
a second power supply (6) for driving the power-supply clock generating circuit (4); and
a second power-supply controller (5) for controlling a supply of power from the second power supply (6) to the power-supply clock generating circuit (4),
wherein when the microprocessor (3) senses that a timer function is set in the clock function block (3a), the microprocessor (3) prompts the first power supply (10) to power the clock function block (3a) and the display section (9), and prompts the second power-supply controller (5) to power the power-supply clock generating circuit (4) in response to an opening act or closing act of the door (12),
**characterized in that**:
when no change in operation occurs during a given time, the microprocessor (3) prompts the second power-supply controller (5) to cut off the supply of power to the power-supply clock generating circuit (4),
wherein when the microprocessor (3) senses that the timer function is not set in the clock function block (3 a) and when no change in operation occurs in a given time after the door (12) is opened or closed, the microprocessor (3) prompts the first power-supply controller (8) and the second power-supply controller (5) to stop the supply of power from the first power supply (10) and the second power supply (6).

2. The cooking heater (1) of claim 1,
wherein the power-supply clock generating circuit (4) provides the microprocessor (3) with a power-supply clock to which the microprocessor (3) synchronizes,

3. The cooking heater (1) of claim 1,
wherein when no change in operation of the cooking heater (1) occurs during a given time after the door (12) is opened or closed, the microprocessor (3) moves into a SLOW mode,
wherein in a SLOW mode, the supply of power to the microprocessor (3) is maintained, the supply of power to the power-supply clock generating circuit (4) is cut off, the microprocessor (3) stops an oscillator of high-speed action and switches to an oscillator of low-speed action.

4. The cooking heater (1) of claim 1,
wherein the display section (9) includes a time indicator (9a) and a backlight LED (9b),
wherein when the supply of power is halted to the power-supply clock generating circuit (4), a brightness of the backlight LED (9b) is changed for informing that the cooking heater (1) moves into a power-saving mode.

## Patentansprüche

1. Heizgerät (1) zum Garen, das aufweist:
eine Kochkammer (11) zum Unterbringen bzw. Aufnehmen eines Gegenstandes (15), der zu erwärmen ist;
eine Tür (12), die an der Kochkammer (11) angebracht ist;
einen Heizer (13) zum Erwärmen des Gegenstandes (15), der in der Kochkammer (11) zu erwärmen ist;
eine Hauptsteuerschaltung (2) zum Steuern des Heizers (13);
einen Mikroprozessor (3) zum Steuern der Hauptsteuerschaltung (2);
einen Uhrfunktionsblock bzw. Taktfunktionsblock (3a), in welchem Zeit durch den Mikroprozessor (3) gezählt wird;
einen Anzeigeabschnitt (9) zum Anzeigen der Zeit, die in dem Uhrfunktionsblock bzw. Taktfunktionsblock (3a) gezählt wurde;
eine Stromzufuhrtakterzeugungsschaltung (4) zum Zuführen eines Stromzuführtaktes für den Mikroprozessor (3);
eine erste Stromzufuhr (10) zum Treiben des Mikroprozessors (3), des Uhrfunktionsblocks bzw. Taktfunktionsblock (3a), des Anzeigeabschnitts (9) und der Hauptsteuerschaltung (2);
eine erste Stromzuführsteuerung (8) zum Steuern einer Zufuhr von Strom bzw. Leistung von der ersten Stromzufuhr (10) zu dem Mikroprozessor (3), dem Uhrfunktionsblock bzw. Taktfunktionsblock (3a), dem Anzeigeabschnitt (9) und der Hauptsteuerschaltung (2);
eine zweite Stromzufuhr (6) zum Treiben der Stromzuführtakterzeugungsschaltung (4); und
eine zweite Stromzuführsteuerung (5) zum Steuern einer Zufuhr von Strom bzw. Leistung von der zweiten Stromzufuhr (6) zu der Stromzuführtakterzeugungsschaltung (4),
wobei, wenn der Mikroprozessor (3) fühlt bzw. abtastet, dass eine Timerfunktion bzw. Schaltuhrfunktion oder Taktgeberfunktion in dem Uhrfunktionsblock bzw. Taktfunktionsblock (3a) gesetzt bzw. eingestellt ist, fordert der Mikroprozessor (3) die erste Stromzufuhr (10) auf, den Uhrfunktionsblock bzw. Taktfunktionsblock (3a) und den Anzeigeabschnitt (9) zu versorgen, und fordert die zweite Stromzufuhrsteuerung (5) auf, die Stromzuführtakterzeugungsschaltung (4) zu versorgen, und zwar in Antwort auf einen Öffnungsvorgang oder einen Schließvorgang der Tür (12),
**dadurch gekennzeichnet, dass**:
wenn keine Änderung im Betrieb während einer gegebenen Zeit stattfindet, fordert der Mikroprozessor (3) die zweite Stromzuführsteuerung (5) auf, die Zufuhr des Stroms bzw. der Leistung zu der Stromzuführtakterzeugungsschaltung (4) abzuschalten bzw. abzusperren,
wobei, wenn der Mikroprozessor (3) fühlt bzw. abtastet, dass die Timerfunktion bzw. Schaltuhrfunktion oder Taktgeberfunktion in dem Uhrfunktionsblock bzw. Taktfunktionsblock (3a) nicht gesetzt bzw. eingestellt ist, und wenn keine Änderung im Betrieb in einer gegebenen Zeit nachdem die Tür (12) geöffnet oder geschlossen wurde, stattfindet, fordert der Mikroprozessor (3) die erste Stromzuführsteuerung (8) und die zweite Stromzuführsteuerung (5) auf, die Zufuhr des Stroms bzw. der Leistung von der ersten Stromzufuhr (10) und der zweiten Stromzufuhr (6) zu stoppen bzw. zu beenden.

2. Heizgerät zum Garen (1) nach Anspruch 1,
wobei die Stromzuführtakterzeugungsschaltung (4) dem Mikroprozessor (3) einen Stromzuführtakt bereitstellt, zu welchem der Mikroprozessor (3) synchronisiert.

3. Heizgerät zum Garen (1) nach Anspruch 1,
wobei, wenn keine Änderung im Betrieb des Heizgeräts zum Garen (1) während einer gegebenen Zeit nachdem die Tür (12) geöffnet oder geschlossen wurde, stattfindet, wechselt bzw. geht der Mikroprozessor (3) in einen Langsam-Modus bzw. SLOW-Modus,
wobei in einem Langsam-Modus bzw. SLOW-Modus die Zufuhr von Strom bzw. Leistung zum Mikroprozessor (3) beibehalten ist, wobei die Zufuhr vom Strom bzw. Leistung zu der Stromzuführtakterzeugungsschaltung (4) abgeschaltet bzw. abgetrennt ist, wobei der Mikroprozessor (3) einen Oszillator einer Hochgeschwindigkeitsaktion stoppt bzw. beendet und zu einem Oszillator einer Niedriggeschwindigkeitaktion schaltet.

4. Heizgerät zum Garen (1) nach Anspruch 1,
wobei der Anzeigeabschnitt (9) einen Zeitanzeiger (9a) und eine Hintergrundlicht-LED (9b) einschließt,
wobei, wenn die Zufuhr vom Strom bzw. Leistung zu der Stromzuführtakterzeugungsschaltung (4) angehalten ist, wird eine Helligkeit der Hintergrundlicht-LED (9b) geändert, und zwar um zu informieren, dass das Heizgerät zum Garen (1) sich zu einem Stromspar-Modus bewegt bzw. in einen Stromspar-Modus wechselt.

## Revendications

1. Elément chauffant de cuisson (1) comprenant :
une chambre de cuisson (11) conçue pour recevoir un objet (15) à chauffer ;
une porte (12) montée sur la chambre de cuisson (11) ;
un dispositif de chauffage (13) conçu pour chauffer l'objet (15) devant être chauffé dans la chambre de cuisson (11) ;
un circuit de commande principal (2) conçu pour commander le dispositif de chauffage (13) ;
un microprocesseur (3) conçu pour commander le circuit de commande principal (2) ;
un bloc (3a) à fonction d'horloge, dans lequel le temps est décompté par le microprocesseur (3) ;
une zone d'affichage (9) dévolue à l'affichage du temps décompté dans le bloc (3 a) à fonction d'horloge ;
un circuit (4) générateur d'horloge d'alimentation en puissance, conçu pour fournir une horloge d'alimentation en puissance destinée au microprocesseur (3) ;
une première alimentation en puissance (10), conçue pour entraîner le microprocesseur (3), le bloc (3a) à fonction d'horloge, la zone d'affichage (9) et le circuit de commande principal (2) ;
un premier dispositif (8) de commande d'alimentation en puissance, conçu pour commander une alimentation en puissance provenant de la première alimentation en puissance (10) et destinée au microprocesseur (3), au bloc (3a) à fonction d'horloge, à la zone d'affichage (9) et au circuit de commande principal (2) ;
une seconde alimentation en puissance (6), conçue pour entraîner le circuit (4) générateur d'horloge d'alimentation en puissance ; et
un second dispositif (5) de commande d'alimentation en puissance, conçu pour commander une alimentation en puissance provenant de la seconde alimentation en puissance (6) et destinée au circuit (4) générateur d'horloge d'alimentation en puissance,
dans lequel lorsque le microprocesseur (3) détecte qu'une fonction de minuterie est réglée dans le bloc (3a) à fonction d'horloge, ledit microprocesseur (3) incite la première alimentation en puissance (10) à activer ledit bloc (3a) à fonction d'horloge et la zone d'affichage (9), et incite le second dispositif (5) de commande d'alimentation en puissance à activer le circuit (4) générateur d'horloge d'alimentation en puissance, en réponse à un processus d'ouverture ou à un processus de fermeture de la porte (12),
**caractérisé par le fait que**,
si aucun changement n'intervient dans le fonctionnement pendant un temps donné, le microprocesseur (3) incite le second dispositif (5) de commande d'alimentation en puissance à interrompre l'alimentation en puissance destinée au circuit (4) générateur d'horloge d'alimentation en puissance,
dans lequel lorsque le microprocesseur (3) détecte que la fonction de minuterie n'est pas réglée dans le bloc (3a) à fonction d'horloge, et si aucun changement n'intervient dans le fonctionnement pendant un temps donné, après l'ouverture ou la fermeture de la porte (12), ledit microprocesseur (3) incite le premier dispositif (8) de commande d'alimentation en puissance et le second dispositif (5) de commande d'alimentation en puissance à arrêter l'alimentation en puissance provenant de la première alimentation en puissance (10) et de la seconde alimentation en puissance (6).

2. Elément chauffant de cuisson (1) selon la revendication 1,
dans lequel le circuit (4) générateur d'horloge d'alimentation en puissance délivre, au microprocesseur (3), une horloge d'alimentation en puissance avec laquelle ledit microprocesseur (3) se synchronise.

3. Elément chauffant de cuisson (1) selon la revendication 1,
dans lequel, si aucun changement n'intervient dans le fonctionnement dudit élément chauffant de cuisson (1) pendant un temps donné, après l'ouverture ou la fermeture de la porte (12), le microprocesseur (3) passe à un mode LENT,
dans lequel, dans un mode LENT, l'alimentation en puissance du microprocesseur (3) est maintenue, l'alimentation en puissance du circuit (4) générateur d'horloge d'alimentation en puissance est interrompue, ledit microprocesseur (3) arrête un oscillateur opérant à grande vitesse et commute sur un oscillateur opérant à faible vitesse.

4. Elément chauffant de cuisson (1) selon la revendication 1,
dans lequel la zone d'affichage (9) inclut un indicateur de temps (9a) et une DEL de rétro-éclairage (9b),
dans lequel, lorsqu'il est mis un terme à l'alimentation en puissance du circuit (4) générateur d'horloge d'alimentation en puissance, une luminosité de ladite DEL de rétro-éclairage (9b) est modifiée pour informer que ledit élément chauffant de cuisson (1) passe à un mode d'économie d'énergie.
